(19) Europäisches Patentamt / European Patent Office / Office européen des brevets

(11) **EP 2 955 692 A1**

(12) **EUROPEAN PATENT APPLICATION**

(43) Date of publication:
**16.12.2015 Bulletin 2015/51**

(51) Int Cl.:
**G06T 5/00** (2006.01)

(21) Application number: **14461539.0**

(22) Date of filing: **09.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Patents Factory Ltd. Sp. z o.o.**
**65-043 Zielona Gora (PL)**

(72) Inventors:
• **Paczkowski, Jacek**
**65-119 Zielona Gora (PL)**

• **Kramek, Krzysztof**
**65-119 Zielona Góra (PL)**
• **Nalewa, Tomasz**
**65-140 Zielona Góra (PL)**

(74) Representative: **Blonski, Pawel**
**EP-Patent**
**Konstruktorow 30/2**
**65-119 Zielona Gora (PL)**

(54) **Method and system for sharpening or blurring an image**

(57)     A method for sharpening or blurring an input image (P), the method comprising the steps of: creating a first image (DX) by calculating, for each color component of a pixel, a differential coefficient along the X-axis of the input image (P) by using a central finite difference; creating a second image (DY) by calculating, for each color component of a pixel, a differential coefficient along the Y-axis of the input image (P) by using a central finite difference; creating a third image (DXY) by adding images (DX) and (DY) on a per pixel's color component basis; and creating an output image (P') by subtracting, from the input image (P), the third image (DXY) having values of pixels multiplied by a predetermined positive or negative coefficient k.

Fig. 1

**Description**

The present invention relates to a method and system for sharpening or blurring an image.

There are known various methods for processing images, in particular sharpening or blurring.

A US patent US5696850 discloses a system for automatic image sharpening in an electronic imaging system. The components of the device have modulation transfer functions. After capturing an image with an imaging device, a system modulation transfer function is generated from the imaging device modulation transfer function and the reproduction device modulation transfer function, and is used to generate a sharpening function, followed by application of the sharpening filter to the captured image.

A US patent application US2011/0096366 presents an image processing apparatus which performs processing of applying blur processing to divided image data, and subsequently, compositing such images. The apparatus estimates a pixel out of an image boundary of first image data and neighboring image data, and then generates blurring image data using a filter for the first image data, with reference to the first image data, the second image data and an estimation pixel estimated by the out of image boundary estimation unit.

It would be advantageous to provide a method for sharpening or blurring an image that is simple and effective, and easy to implement in computer software and/or hardware.

The object of the invention is a method for sharpening or blurring an input image (P), the method comprising the steps of: creating a first image (DX) by calculating, for each color component of a pixel, a differential coefficient along the X-axis of the input image (P) by using a central finite difference; creating a second image (DY) by calculating, for each color component of a pixel, a differential coefficient along the Y-axis of the input image (P) by using a central finite difference; creating a third image (DXY) by adding images (DX) and (DY) on a per pixel's color component basis; and creating an output image (P') by subtracting, from the input image (P), the third image (DXY) having values of pixels multiplied by a predetermined positive or negative coefficient k.

Another object of the present invention is a system for sharpening or blurring an image represented by an input image (P), the system comprising: a data bus communicatively coupling components of the system; a memory for storing required software and temporary data; a controller; the system further comprising: a user interface configured to receive user input determining the k coefficient value; an input interface configured to receive a source image for sharpening or blurring; an output interface configured to output a sharpened or blurred image; wherein the controller is configured to operate according to the method of the present invention.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects presented herein are accomplished by providing a method and a system for sharpening or blurring an image. Further details and features of the present invention, its nature and various advantages will become more apparent from the following detailed description of the preferred embodiments shown in a drawing, in which:

Fig. 1 presents an example embodiment of a method for sharpening or blurring an image;

Fig. 2 present a system for sharpening or blurring an image; and

Figs. 3A - 3C present images examples of P, DX, DY, DXY, and output images P'.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

DESCRIPTION OF EMBODIMENTS

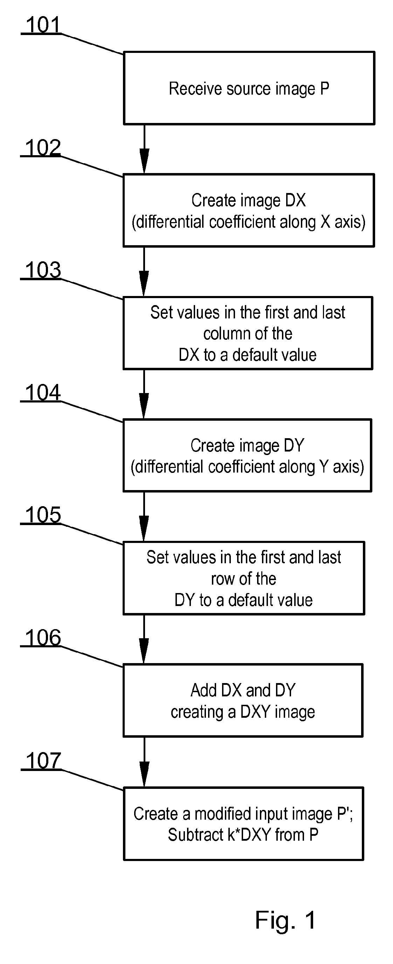

Fig. 1 shows an exemplary embodiment of the method for sharpening or blurring an image according to the present invention. The process starts at step 101, where a source image is received. Subsequently, at step 102 of the procedure, there is created a new image DX of the same dimensions in pixels, based on the received input image P, wherein values of pixels of the DX image are a differential coefficient in the X axis of the P image. The differential coefficients are calculated on a per pixel basis along the X axis for each of the R, G, B values (Red, Green Blue) of pixels of the source image P, so that a pixel value of (x,y) coordinates is as follows:

$$DXR_{(x,y)} = \frac{PR_{(x+1,\,y)} - PR_{(x-1,\,y)}}{2}$$

$$DXG_{(x,y)} = \frac{PG_{(x+1,\,y)} - PG_{(x-1,\,y)}}{2}$$

$$DXB_{(x,y)} = \frac{PB_{(x+1,\,y)} - PB_{(x-1,\,y)}}{2}$$

wherein R, G and B values indicate given color component of an input pixel and the DX image pixel. As can be seen a central finite difference is applied as an approximation of derivative.

Next, in step 103, the newly created image DX has its first and last column's pixels set to a default value such as RGB 0, 0, 0 meaning derivative equal to zero. Thus, the DX image retains the same size as the input image P.

Subsequently, at step 104 of the procedure, a new image DY is created of the same dimensions in pixels, based on the input image P. It is done by calculating a differential coefficient on a per pixel basis along the Y-axis of P for each of the R, G, B components values of pixels of image P, so that a pixel value of (x,y) coordinates is as follows:

$$DYR_{(x,y)} = \frac{PR_{(x,\,y+1)} - PR_{(x,\,y-1)}}{2}$$

$$DYG_{(x,y)} = \frac{PG_{(x,\,y+1)} - PG_{(x,\,y-1)}}{2}$$

$$DYB_{(x,y)} = \frac{PB_{(x,\,y+1)} - PB_{(x,\,y-1)}}{2}$$

As can be seen a central finite difference is applied as an approximation of derivative.
Next, in step 105, the newly created image DY has its first and last row's pixels set to a default value such as RGB 0, 0, 0 meaning derivative equal to zero. Thus the DY image retains the same size as the input image P.

At step 106, there is created a new image DXY of the same dimensions in pixels as P, DX, DY. It is done by summing images DX and DY on a per pixel's color component basis as follows:

$$DXYR_{(x,y)} = DXR_{(x,y)} + DYR_{(x,y)}$$

$$DXYG_{(x,y)} = DXG_{(x,y)} + DYG_{(x,y)}$$

$$DXYB_{(x,y)} = DXB_{(x,y)} + DYB_{(x,y)}$$

The DXY image shows a derivative in both axes X-Y. Since preferably the values are within a range of -255 to +255 it is not possible to show it directly on a display, because computer displays present values in the range of 0..255. One method of converting the -255 to +255 range into a displayable range is to divide a value of DXY image pixel by 2 and add 128. The resulting image resembles a relief that is displayable on a regular display. In sections where there are no changes, in the original image, a gray color is present. A derivative is a measure of change and therefore the resulting image presents coordinates where in the original image most contrast changes are present. In case neighboring pixels in the input image are white and black, the derivative will be 255. In case the colors of the pixels are similar the derivative will be low.

As the last step 107, there is created a modified P' image of the image P based on the previously calculated image DXY. The calculations are executed in the following manner:

$$PR'^{(x,y)} = PR_{(x,y)} - k * DXYR_{(x,y)}$$

$$PG'_{(x,y)} = PG_{(x,y)} - k * DXYG_{(x,y)}$$

$$PB'_{(x,y)} = PB_{(x,y)} - k * DXYB_{(x,y)}$$

wherein the coefficient (k) determines the degree of sharpening or blurring of the input image P. For positive values of (k), the image is being sharpened, and for negative values of (k) the image is being blurred.

In case of 8-bit values with sign the average histogram of DXY image reveals that typical range of values is -16..+16 (which of course depends on an image). Therefore, assuming that DXY is dominated by absolute pixel values below 16, preferably the k coefficient is within the range of -16 to 16, because after multiplication the maximum value of 255 will be reached.

A typical input image is a bitmap that has color component values, which are positive numbers, typically 8-bit. The images DX, DY and DXY have color component values, which are numbers with a sign, and representation of them requires more bits than the representations of the input image P. The resulting image P' should be, after completing the calculations, converted to the same form as the input image P.

Therefore, if the image P has color components of uint8 type (8-bit number without sign), then the output image P' should also have color components of this type. The values of the output image P' before changing the type can have values from outside of the target type. Consequently, there will occur a saturation of the values. For example, after sharpening, the component R of one of the pixels of P' may have a value of +1013. After changing the type to uint8, it will have a value +255. The component G of another pixel can have a value of -117. After conversion to uint8 type, this component will have a value of 0.

The above examples of equations have been presented for RGB color model. Nevertheless the same principle applies to CMY color model. However for YUV or HSI the method is not directly applicable due to a different image representation method. However, in case of these different image representation methods, the method according to the present invention may be applied only to luminance thereby achieving a very similar effect.

In case of images with substantial noise (which is arbitrary), the central finite difference may be changed into four-point central finite difference as follows:

$$DXR_{(x,y)} = \frac{PR_{(x+2,y)} - 8*PR_{(x+1,y)} + 8*PR_{(x-1,y)} - PR_{(x-2,y)}}{12}$$

$$DXG_{(x,y)} = \frac{PG_{(x+2,y)} - 8*PG_{(x+1,y)} + 8*PG_{(x-1,y)} - PG_{(x-2,y)}}{12}$$

$$DXB_{(x,y)} = \frac{PB_{(x+2,y)} - 8*PB_{(x+1,y)} + 8*PB_{(x-1,y)} - PB_{(x-2,y)}}{12}$$

$$DYR_{(x,y)} = \frac{PR_{(x,y+2)} - 8*PR_{(x,y+1)} + 8*PR_{(x,y-1)} - PR_{(x,y-2)}}{12}$$

$$DYG_{(x,y)} = \frac{PG_{(x,y+2)} - 8*PG_{(x,y+1)} + 8*PG_{(x,y-1)} - PG_{(x,y-2)}}{12}$$

$$DYB_{(x,y)} = \frac{PB_{(x,y+2)} - 8*PB_{(x,y+1)} + 8*PB_{(x,y-1)} - PB_{(x,y-2)}}{12}$$

The amount of calculations increases but the influence of the noise on sharpening/blurring is reduced.

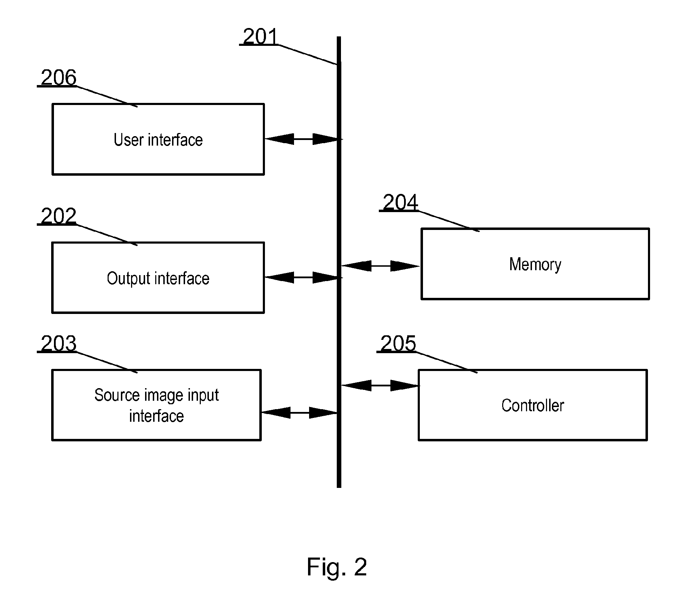

Fig. 2 shows a system for sharpening or blurring an image. The system may be implemented by using programmable logic circuits such as PGA (Programmable Gate Array), FPGA (Field-Programmable Gate Array) or ASIC (Application-Specific Integrated Circuit) or SoC (System on the Chip).

The system, according to the present invention, comprises a suitable data bus 201 for communicating, preferably bidirectionally, all circuits of the system. Further, the system comprises a memory 204 for storing required software for the controller 205 and any temporary data needed for operation of the system, such as images data. The controller 205 is configured to execute software that allows for sharpening or blurring of the image, wherein such software is configured to execute the method steps of Fig. 1.

The controller 205 may also receive user input determining (k) coefficient value via optional user interface 206. Preferably, the system comprises suitable input interface 203 for receiving a source image for sharpening or blurring as well as a suitable output interface 202 for outputting a sharpened or blurred image. In one embodiment the input interface 203 may be bidirectional and serve as an output interface 202 also.

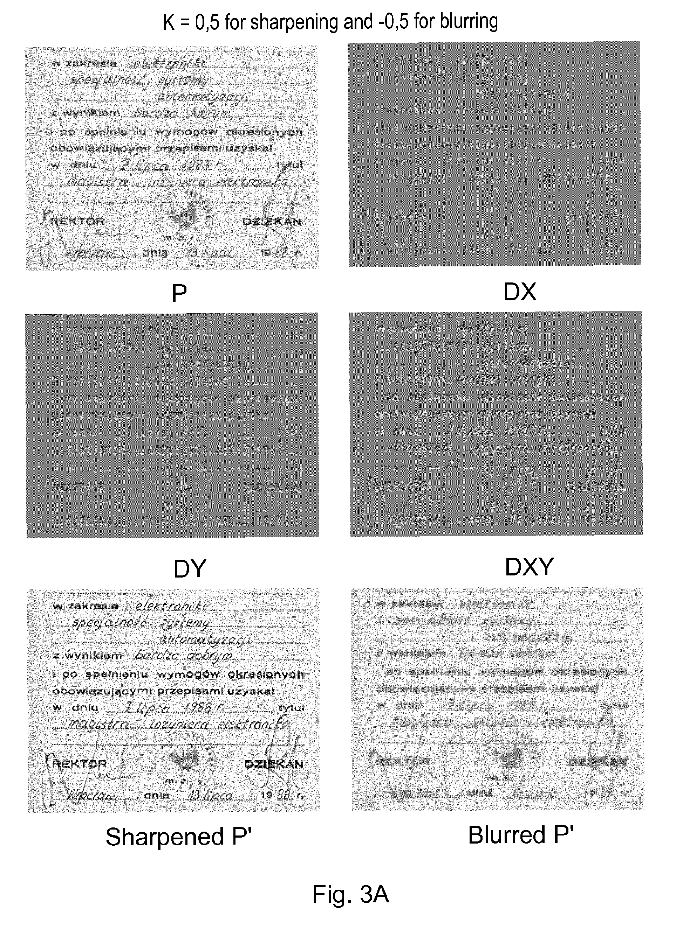

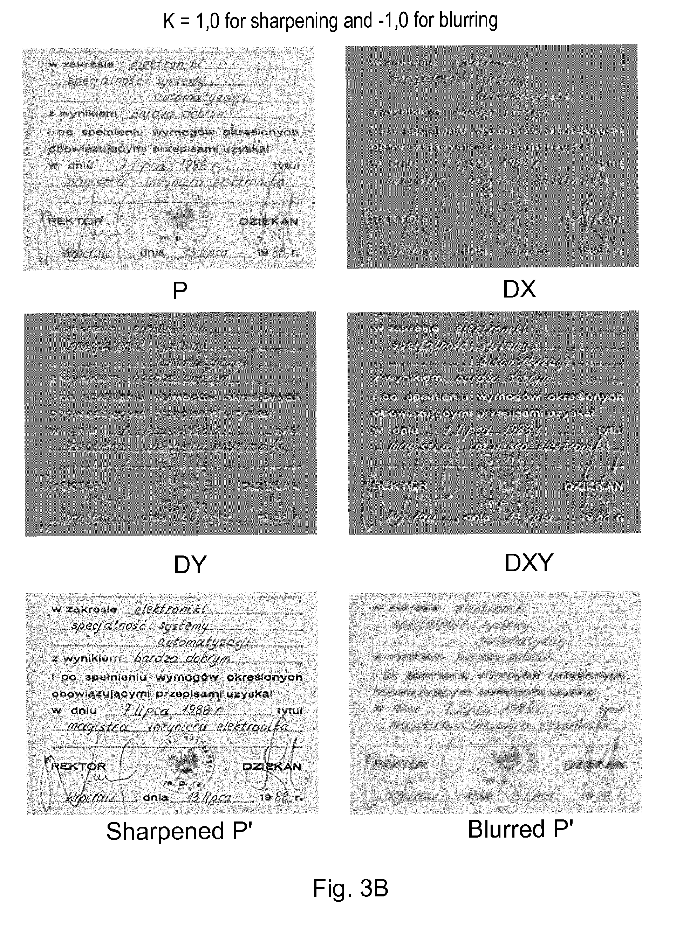

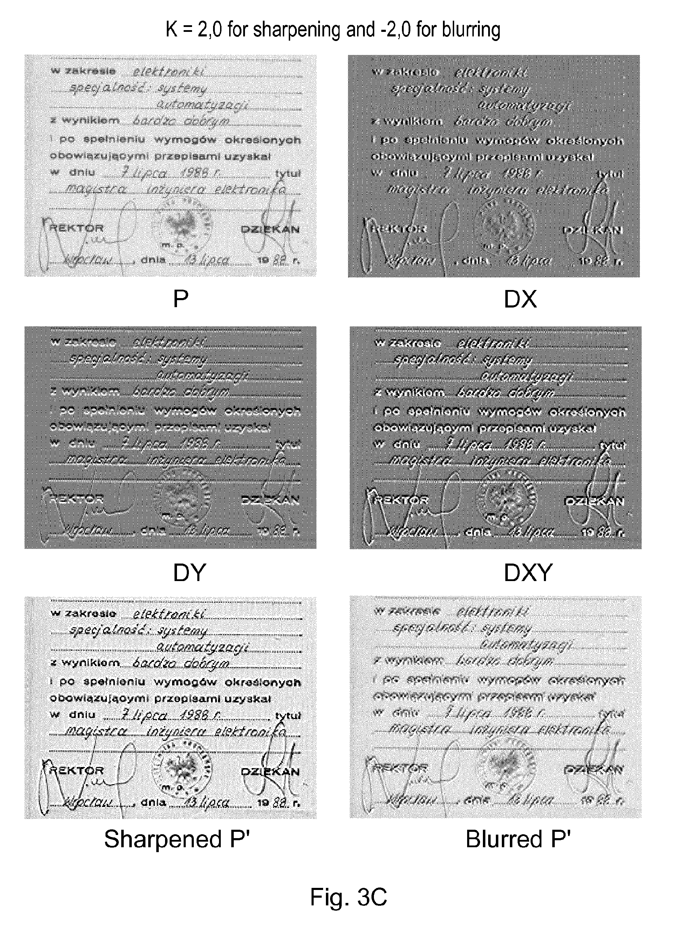

Figs. 3A - 3C present an exemplary gray-scale bitmap P and corresponding bitmaps DX, DY and DXY (the color components of which have been scaled to make it reproducible within a 0-255 range).

Figs. 3A - 3C also present modified images P' created by using coefficients:

3A: k=0.5 (sharpened image) and k=-0.5 (blurred image);

3B: k=1.0 (sharpened image) and k=-1.0 (blurred image);

3C: k=2.0 (sharpened image) and k=-2.0 (blurred image);

The method can be used in software for video and image editing, video and image previewing and similar. This algorithm can be also implemented in video recorders and cameras. In such case, the implementation can be through hardware (FPGA or ASIC).

It can be easily recognized, by one skilled in the art, that the aforementioned method for sharpening or blurring an image may be performed and/or controlled by one or more computer programs. Such computer programs are typically executed by utilizing the computing resources in a computing device such as personal computers, personal digital assistants, cellular telephones, dedicated controllers or the like. Applications are stored on a nontransitory medium. An example of a non-transitory medium is a non-volatile memory, for example a flash memory or volatile memory, for example RAM.

The computer instructions are executed by a suitable processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A method for sharpening or blurring an input image (P), the method being **characterized in that** it comprises the steps of:

   • creating (102) a first image (DX) by calculating, for each color component of a pixel, a differential coefficient along the X-axis of the input image (P) by using a central finite difference;
   • creating (104) a second image (DY) by calculating, for each color component of a pixel, a differential coefficient along the Y-axis of the input image (P) by using a central finite difference;
   • creating (106) a third image (DXY) by adding images (DX) and (DY) on a per pixel's color component basis; and
   • creating (107) an output image (P') by subtracting, from the input image (P), the third image (DXY) having values of pixels multiplied by a predetermined positive or negative coefficient k.

2. The method according to claim 1, wherein the values of pixels of the first image (DX) are calculated as follows:

$$DXR_{(x,y)} = \frac{PR_{(x+1,y)} - PR_{(x-1,y)}}{2}$$

$$DXG_{(x,y)} = \frac{PG_{(x+1,y)} - PG_{(x-1,y)}}{2}$$

$$DXB_{(x,y)} = \frac{PB_{(x+1,y)} - PB_{(x-1,y)}}{2}$$

wherein R, G and B values indicate given RGB color component of the input image (P) pixel and the first image (DX) pixel.

**3.** The method according to claim 1, wherein the values of pixels of the first image (DX) are calculated as follows:

$$DXR_{(x,y)} = \frac{PR_{(x+2,y)} - 8 * PR_{(x+1,y)} + 8 * PR_{(x-1,y)} - PR_{(x-2,y)}}{12}$$

$$DXG_{(x,y)} = \frac{PG_{(x+2,y)} - 8 * PG_{(x+1,y)} + 8 * PG_{(x-1,y)} - PG_{(x-2,y)}}{12}$$

$$DXB_{(x,y)} = \frac{PB_{(x+2,y)} - 8 * PB_{(x+1,y)} + 8 * PB_{(x-1,y)} - PB_{(x-2,y)}}{12}$$

wherein R, G and B values indicate given RGB color component of the input image (P) pixel and the first image (DX) pixel.

**4.** The method according to claim 1, wherein the values of pixels of the second image (DY) are calculated as follows:

$$DYR_{(x,y)} = \frac{PR_{(x,y+1)} - PR_{(x,y-1)}}{2}$$

$$DYG_{(x,y)} = \frac{PG_{(x,y+1)} - PG_{(x,y-1)}}{2}$$

$$DYB_{(x,y)} = \frac{PB_{(x,y+1)} - PB_{(x,y-1)}}{2}$$

wherein R, G and B values indicate given RGB color component of the input image (P) pixel and the second image (DY) pixel.

5. The method according to claim 1, wherein the values of pixels of the second image (DY) are calculated as follows:

$$DYR_{(x,y)} = \frac{PR_{(x,y+2)} - 8 * PR_{(x,y+1)} + 8 * PR_{(x,y-1)} - PR_{(x,y-2)}}{12}$$

$$DYG_{(x,y)} = \frac{PG_{(x,y+2)} - 8 * PG_{(x,y+1)} + 8 * PG_{(x,y-1)} - PG_{(x,y-2)}}{12}$$

$$DYB_{(x,y)} = \frac{PB_{(x,y+2)} - 8 * PB_{(x,y+1)} + 8 * PB_{(x,y-1)} - PB_{(x,y-2)}}{12}$$

wherein R, G and B values indicate given RGB color component of the input image (P) pixel and the second image (DY) pixel.

6. The method according to claim 1, wherein the predetermined positive or negative coefficient k is within the range of -16 to 16.

7. The method according to claim 1, wherein the output image (P') has pixels represented by the same numbering type as the input bitmap (P).

8. The method according to claim 7, wherein after subtraction of the third image (DXY) from the input image (P), the pixel value exceeds the allowed range of values of the numbering type, the pixel value is changed to the closest allowed value within the range.

9. The method according to claim 1, further comprising the step of supplementing the first image (DX) by a column at the beginning and the end and supplementing the second image (DY) by a row at the beginning and the end.

10. A computer program comprising program code means for performing all the steps of the computer-implemented method according to any of claims 1-9 when said program is run on a computer.

11. A computer readable medium storing computer-executable instructions performing all the steps of the computer-implemented method according to any of claims 1-9 when executed on a computer.

12. A system for sharpening or blurring an image represented by an input image (P), the system comprising:

- a data bus (201) communicatively coupling components of the system;
- a memory (204) for storing required software and temporary data;
- a controller (205);

the system being **characterized in that** it further comprises:

- a user interface (206) configured to receive user input determining the k coefficient value;
- an input interface (203) configured to receive a source image for sharpening or blurring;
- an output interface (202) configured to output a sharpened or blurred image;
- wherein the controller (205) is configured to operate according to the method of claim 1.

101

```
Receive source image P
```

102

```
Create image DX
(differential coefficient along X axis)
```

103

```
Set values in the first and last
column of the
DX to a default value
```

104

```
Create image DY
(differential coefficient along Y axis)
```

105

```
Set values in the first and last
row of the
DY to a default value
```

106

```
Add DX and DY
creating a DXY image
```

107

```
Create a modified input image P';
Subtract k*DXY from P
```

Fig. 1

Fig. 2

K = 0,5 for sharpening and -0,5 for blurring

P

DX

DY

DXY

Sharpened P'

Blurred P'

Fig. 3A

K = 1,0 for sharpening and -1,0 for blurring

P

DX

DY

DXY

Sharpened P'

Blurred P'

Fig. 3B

K = 2,0 for sharpening and -2,0 for blurring

P

DX

DY

DXY

Sharpened P'

Blurred P'

Fig. 3C

Europäisches
Patentamt

European
Patent Office

Office européen
des brevets

## EUROPEAN SEARCH REPORT

Application Number

EP 14 46 1539

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A. POLESEL ET AL: "Image enhancement via adaptive unsharp masking", IEEE TRANSACTIONS ON IMAGE PROCESSING, vol. 9, no. 3, 1 March 2000 (2000-03-01), pages 505-510, XP055104081, ISSN: 1057-7149, DOI: 10.1109/83.826787 * Equation (1); figures 1, 3 * * Section II * | 1-12 | INV. G06T5/00 |
| Y | William K. Pratt: "Chapter 15 Edge Detection" In: "Digital Image Processing", 1 January 2001 (2001-01-01), John Wiley & Sons, Inc., XP055140721, ISBN: 978-0-47-137407-7 pages 443-507, * Orthogonal Gradient Generation; page 449 - page 461; figures 15.2-1, 15.2-2 * * page 469 - page 482 * | 1-12 | |
| A | RAMPONI G ET AL: "NONLINEAR UNSHARP MASKING METHODS FOR IMAGE CONTRAST ENHANCEMENT", JOURNAL OF ELECTRONIC IMAGING, SPIE / IS & T, 1000 20TH ST. BELLINGHAM WA 98225-6705 USA, vol. 5, no. 3, 1 July 1996 (1996-07-01), pages 353-366, XP000885316, ISSN: 1017-9909, DOI: 10.1117/12.242618 * the whole document * | 1-12 | TECHNICAL FIELDS SEARCHED (IPC) G06T |

-/--

The present search report has been drawn up for all claims

| Place of search | Date of completion of the search | Examiner |
|---|---|---|
| Munich | 22 September 2014 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 46 1539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MITRA S K ET AL: "A new class of nonlinear filters for image enhancement", SPEECH PROCESSING 1. TORONTO, MAY 14 - 17, 1991; [INTERNATIONAL CONFERENCE ON ACOUSTICS, SPEECH & SIGNAL PROCESSING. ICASSP], NEW YORK, IEEE, US, vol. CONF. 16, 14 April 1991 (1991-04-14), pages 2525-2528, XP010043519, DOI: 10.1109/ICASSP.1991.150915 ISBN: 978-0-7803-0003-3 * the whole document * | 1-12 | |

-----

TECHNICAL FIELDS
SEARCHED      (IPC)

The present search report has been drawn up for all claims

| Place of search | Date of completion of the search | Examiner |
|---|---|---|
| Munich | 22 September 2014 | Blaszczyk, Marek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................................

& : member of the same patent family, corresponding
    document

EPO FORM 1503 03.82 (P04C01)

**EP 2 955 692 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5696850 A
- US 20110096366 A